# EUROPEAN PATENT APPLICATION

(11) **EP 4 797 106 A1**
(43) Date of publication of application: **26.08.2026**
(21) Application number: 25159179.8
(22) Date of filing: 20.02.2025
(51) Int. Cl.: G06F 13/40

(54) **TECHNIQUE FOR CONTROLLING A WORKSTATION ASSOCIATED WITH A MEDICAL DEVICE**

(71) Applicant: Roclub GmbH, 10625 Berlin (DE)
(72) Inventor: ISSING, Matthias, 10625 Berlin (DE); CARSTENSEN, Nils, 10625 Berlin (DE)
(74) Representative: Laqua, Bernd Christian Kurt

(57) **Abstract**

A universal serial bus, USB, merging device (200) for simultaneously controlling a workstation (100) associated with a medical device by a local USB input device (120) and a remote input device (130) is disclosed. The USB merging device (200) comprises a first input port (210) configured to be connected to the local USB input device (120), a second input port (220) configured to be connected to a USB device (140) interfacing with the remote input device (130), and a first output port (230) configured to be connected to the workstation (110) via USB. The USB merging device (200) further comprises at least one processor (250) and at least one memory (260) containing instructions executable by the at least one processor (250) such that the at least one processor (250) is operable to receive local control information from the local USB input device (120) and remote control information from the USB device (140) interfacing with the remote input device (130), merge the received control information to obtain merged control information reflecting both the local control information and the remote control information, and transmit the merged control information to the workstation (110) to control the workstation (110) in accordance with the merged control information.

## Description

### Technical Field

The present disclosure generally relates to medical systems. In particular, a universal serial bus (USB) merging device for simultaneously controlling a workstation associated with a medical device by a local USB input device and a remote input device, a system comprising the USB merging device, a computer-implemented method for controlling the workstation, and a computer program product are presented.

### Background

Medical imaging techniques like Magnetic Resonance Imaging (MRI) or Computed Tomography (CT) have a variety of applications in modern medicine. Performing corresponding medical imaging examinations is generally very complex and requires a person with special training, i.e., a radiographer, to be present at the site where the examination is performed. The radiographer has the task of adjusting a medical imaging device via a workstation in order to examine the desired body region and to achieve the best possible image quality. For examining specific questions, specialized knowledge and extensive experience are required.

However, there is a general shortage of these professionals worldwide, making it challenging for operators of medical imaging devices, e.g., hospitals or medical imaging centres, to have an adequately qualified radiographer available on site at the right time.

To solve this problem, various medical systems exist that support medical remote operation. For example, existing systems are based on Virtual Network Computing (VNC) technologies enabling remote operation of the workstation associated with the medical imaging device and thus enabling the radiographer to work as a remote operator of the medical imaging device. As a result, the radiographer no longer needs to be on site for an examination. Instead, it is sufficient that a local operator with lower qualifications is on site to take over the remaining tasks that have to be performed on site, e.g., positioning and care of a patient situated in the medical imaging device.

However, VNC technologies require that a specific software is installed on the workstation to enable the remote access to the workstation. Thus, VNC technologies require changes to the workstation software and further commonly require payment of license fees which is cost intensive.

As an alternative to VNC technologies, Keyboard-Video-Mouse (KVM) technologies may be used. With KVM technologies, a video monitor signal is transmitted via a KVM switch, and a virtual computer mouse and virtual computer keyboard are emulated in the workstation. While KVM technologies have the advantage that no changes need to be made to the workstation software, as only a copy of a monitor signal is transmitted, KVM technologies depend on the configuration of an operating system of the workstation. Generally, the workstation only allows the connection of a single locally connected computer mouse with a specific identifier, e.g., a vendor identification number and product identification number. Another computer mouse with a different identifier is not recognized by the operating system. Therefore, a virtual mouse cannot be emulated in parallel with the local mouse for remote control via KVM technology. A switch could be used so that either the local mouse or the virtual mouse is connected to enable remote control. However, this solution is not flexible enough and particularly does not allow simultaneous operation of the local and virtual mouse, and the specific identifier of the connected mouse must always be configured accordingly.

### Summary

Thus, there is a need for a technique that allows simultaneous operation of a workstation associated with a medical device by a local operator and a remote operator, wherein the technique should be easy to use, i.e., no changes to the software installed on the workstation should be required (preferably operable by "plug and play"), and should be cheap compared to complex software solutions requiring payment of license fees.

According to a first aspect, a USB merging device for simultaneously controlling a workstation associated with a medical device by a local USB input device and a remote input device is provided. The USB merging device comprises a first input port configured to be connected to the local USB input device, a second input port configured to be connected to a USB device interfacing with the remote input device, and a first output port configured to be connected to the workstation via USB. The USB merging device further comprises at least one processor and at least one memory containing instructions executable by the at least one processor such that the at least one processor is operable to receive local control information from the local USB input device and remote control information from the USB device interfacing with the remote input device, merge the received control information to obtain merged control information reflecting both the local control information and the remote control information, and transmit the merged control information to the workstation to control the workstation in accordance with the merged control information.

The medical device may be any kind of medical device, e.g., a particular device of a medical system. For example, the medical device may be a medical imaging device, which may be associated with any known medical imaging technique, e.g., MRI, CT, or X-ray. The workstation may be or comprise a commercially available workstation commonly used for controlling the medical device. In particular, one or more settings and/or functions of the medical device may be controllable via the workstation.

The at least one processor may comprise one or more microcontrollers. Each of the microcontrollers may be associated with at least one of the ports of the USB merging device, e.g., one port, two ports or all ports. For example, the at least one processor may comprise one microcontroller per port, wherein the microcontrollers may be connected via a controller interface or bus. In other variants, the at least one processor may comprise a single microcontroller associated with all of the ports, for example.

In some variants, the USB device interfacing with the remote input device may be a KVM switch emulating the remote input device. The KVM switch may be or comprise a commercially available KVM switch. The KVM switch may be configured for emulating one of a computer mouse, a computer keyboard, and a composite device. A composite device, as generally understood herein, may comprise a computer mouse and a computer keyboard or, in other words, the composite device may be a device representative of both a computer mouse and a computer keyboard in a single device. As such, the composite device may be configured to transmit control information comprising control inputs of a computer mouse as well as control inputs of a computer keyboard.

In some variants, the local USB input device may be a local computer mouse and the remote input device may be one of a remote computer mouse and a remote composite device. In other variants, the local USB input device may be a local computer keyboard and the remote input device may be one of a remote computer keyboard and a remote composite device. In other words, the remote input device may be or comprise a device corresponding to (or "equivalent to") the local USB input device, so that the local control information can be merged with the remote control information. The local control information and the remote control information may also be said to be of the same type of control information.

In some variants, the local control information may be associated with a first value of a control property and the remote control information may be associated with a second value of the control property, wherein the first and second values may be different from each other and the at least one memory may further contain instructions executable by the at least one processor such that the at least one processor is operable to convert the remote control information based on a difference between the first and second values so that the (converted) second value associated with the converted remote control information matches the first value.

For example, the control property may be one of a mouse resolution, a mouse or keyboard polling rate, a mouse or keyboard debounce time, a mouse or keyboard latency, a keyboard scan rate or any other known property of such computer input devices. In case the local USB input device is a local computer mouse and the remote input device is one of a remote computer mouse or a mouse part of a remote composite device, the control property may be a computer mouse resolution, for example. The first value may then be indicative of a movement scaling of the local computer mouse (e.g., in dots per inch, DPI) and the second value may be indicative of a movement scaling of the remote computer mouse or the mouse part of the remote composite device.

In other words, in case the local USB input device is a local computer mouse, the local control information may be associated with a first resolution of the local computer mouse indicative of a movement scaling of the local computer mouse. Furthermore, the remote control information may be associated with a second resolution of the remote computer mouse or a mouse part of the remote composite device indicative of a movement scaling of the remote computer mouse or the mouse part of the remote composite device. The first and second resolutions may be different from each other and the at least one memory may further contain instructions executable by the at least one processor such that the at least one processor may be operable to convert the remote control information based on a difference between the first and second resolutions so that the movement scaling of the remote computer mouse or the mouse part of the remote composite device may match the movement scaling of the local computer mouse. Matching the first and second resolutions may facilitate merging of the control information and may improve user experience when using the workstation.

In some variants, each of the local and remote control information may be associated with multiple control properties, i.e., with a respective first and second value for each of the multiple control properties.

In some variants, each of the local and the remote control information correspond to data streams comprising one or more control inputs, and merging the received information may comprise injecting the one or more control inputs of the remote control information into the local control information. The resulting local control information (i.e., after the injection of the one or more control inputs of the remote control information therein) may be transmitted to the workstation as the merged control information. The merging, e.g., the injection of the one or more control inputs of the remote control information into the local control information, may be performed based on a first-in-first-out (FIFO) technique, for example. In some variants, each control input may be associated with a timestamp and the injection may be based on the timestamps.

In some variants, the one or more control inputs may be indicative of at least one of a movement of a computer mouse or a mouse part of a composite device, scrolling of a computer mouse or a mouse part of a composite device, actuation of at least one button of a computer mouse or a mouse part of a composite device, and actuation of at least one key of a computer keyboard or a keyboard part of a composite device. In some variants, the computer mouse and the computer keyboard may each be a part of a composite device.

In some variants, the USB merging device may further comprise a bridging interface configured to be connected to a second USB merging device as described herein. In these variants, the local USB input device may be one of a local computer mouse and a local computer keyboard and the remote input device may be a remote composite device comprising a mouse part and a keyboard part. The at least one memory may further contain instructions executable by the at least one processor such that the at least one processor may be operable to transmit, via the bridging interface, a part of the remote control information associated with the mouse part of the remote composite device to the second USB merging device, when the local USB input device is a computer keyboard, and to transmit, via the bridging interface, a part of the remote control information associated with the keyboard part of the remote composite device to the second USB merging device, when the local USB input device is a computer mouse. Using two connected USB merging devices enables simultaneously controlling the workstation by two local input devices, e.g., a local computer mouse and a local computer keyboard, as well as a remote composite device.

In some variants, the at least one memory may further contain instructions executable by the at least one processor such that the at least one processor may be operable to emulate a first input device at the workstation. The emulated first input device may use a first descriptor having an identifier associated with the local USB input device so that the emulated first input device may be identified by the workstation as the local USB input device. Emulating an input device at the workstation having an identifier associated with the local USB input device enables the merged control information received at the workstation to appear as if it was received from the local USB input device. It may also be said in the sense that the remote input device is hidden for the workstation and the workstation perceives the received control information as if it only originated from the local USB input device.

In some variants, when the local USB input device is one of a local computer mouse and a local computer keyboard, and the remote input device is a remote composite device comprising a mouse part and a keyboard part, the emulated first input device may be a composite device using the first descriptor and a second descriptor having an identifier associated with the mouse part of the composite device, when the local USB input device is a computer keyboard, and the keyboard part of the composite device, when the local USB input device is a computer mouse. As a result, the workstation may be simultaneously controllable by a local computer mouse and a remote composite device or by a local keyboard and a remote composite device.

According to a second aspect, a system is provided, wherein the system comprises a first USB merging device as described herein, a first local USB input device connected to the first input port of the first USB merging device, and a USB device interfacing with the remote input device connected to the second input port of the first USB merging device. The system may further comprise the workstation and, optionally, the medical device.

In some variants, the first local USB input device may be one of a computer mouse and a computer keyboard and the first USB merging device may comprise a bridging interface as described herein, wherein the system may further comprise a second USB merging device as described herein connected to the bridging interface of the first USB merging device. Moreover, the system may comprise a second local USB input device being the other one of the local computer mouse and the local computer keyboard and connected to the first input port of the second USB merging device. The at least one memory of the second USB merging device may contain instructions executable by the at least one processor of the second USB merging device such that the at least one processor of the second USB merging device may be operable to receive local control information from the second local USB input device and the part of the remote control information from the first USB merging device via the bridging interface as described herein, to merge the received control information to obtain second merged control information reflecting both the local control information from the second local USB input device and the part of the remote control information received via the bridging interface, and to transmit the second merged control information to the workstation to control the workstation in accordance with the second merged control information.

In some variants, the at least one memory of the second USB merging device may further contain instructions executable by the at least one processor of the second USB merging device such that the at least one processor of the second USB merging device may be operable to emulate a second input device at the workstation, the emulated second input device using a third descriptor having an identifier associated with the second local USB input device so that the emulated second input device may be identified by the workstation as the second local USB input device.

In some variants, the bridging interface of the first USB merging device may be connected to the second input port of the second USB merging device. Alternatively, other connection techniques and protocols may be used to connect the first and second USB merging devices, allowing transmission of control information from the first to the second USB merging device accordingly.

According to a third aspect, a computer-implemented method for simultaneously controlling a workstation associated with a medical device by a local USB input device and a remote input device is provided. The method comprises receiving local control information from the local USB input device and remote control information from a USB device interfacing with the remote input device, merging the received control information to obtain merged control information reflecting both the local control information and the remote control information, and transmitting the merged control information to the workstation to control the workstation in accordance with the merged control information.

The method may be implemented by a USB merging device according to the first aspect or a system according to the second aspect. It will be understood that the method may reflect any operations, actions or steps performed by the USB merging device or system according to the first and second aspects described above, and may as such explicitly comprise any such steps as generally described herein with respect to the "USB merging devices" and the corresponding "system".

According to a fourth aspect, there is provided a computer program product comprising instructions that, when executed on at least one processor, cause the at least one processor to carry out the method disclosed herein.

### Brief Description of the Drawings

Further details, advantages and aspects of the present disclosure will become apparent from the following exemplary implementations taken in conjunction with the drawings, wherein:
- Figs. 1 to 4: show schematic representations of different variants of a system for simultaneously controlling a workstation associated with a medical device by a local USB input device and a remote input device according to the present disclosure;
- Fig. 5: shows a flow diagram of a method for simultaneously controlling a workstation associated with a medical device by a local USB input device and a remote input device according to the present disclosure;
- Fig. 6: shows a schematic representation of a computer program product comprising instructions for executing the method according to the present disclosure; and
- Figs. 7 and 8: show schematic representations of different variants of a system for simultaneously controlling a workstation associated with a medical device by a first local USB input device, a second local USB input device, and a remote input device according to the present disclosure.

### Detailed Description

In the following description, for purposes of explanation and not limitation, specific details are set forth in order to provide a thorough understanding of the present disclosure. It will be apparent to one skilled in the art that the present disclosure may be practiced in other embodiments that depart from these specific details. In the following description of exemplary embodiments, the same reference numerals are used to denote the same or similar components.

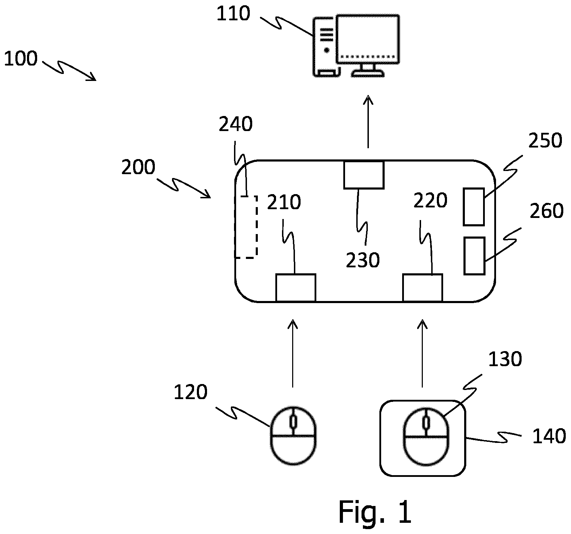

Fig. 1 shows a schematic representation of a system 100 for simultaneously controlling a workstation 110 associated with a medical device by a local USB input device 120 and a remote input device 130. The system 100 comprises the workstation 110, the local USB input device 120, the remote input device 130 and a USB device 140 interfacing with the remote input device 130. Although the USB device 140 interfacing with the remote input device 130 is illustrated by a rectangle surrounding the remote input device 130 (generally thought to indicate that the USB device 140 is the "local representative" of the remote input device 130), it will be understood by the skilled person that the USB device 140 actually interfaces with the remote input device 130 via a technical interface (not shown), such as over an Internet connection or other types of network connections, for example. The USB device 140 interfacing with the remote input device 130 shown in Fig. 1 may be a KVM switch emulating the remote input device 130, for example. The local USB input device 120 and the remote input device 130 shown in Fig. 1 are respective computer mice 120, 130.

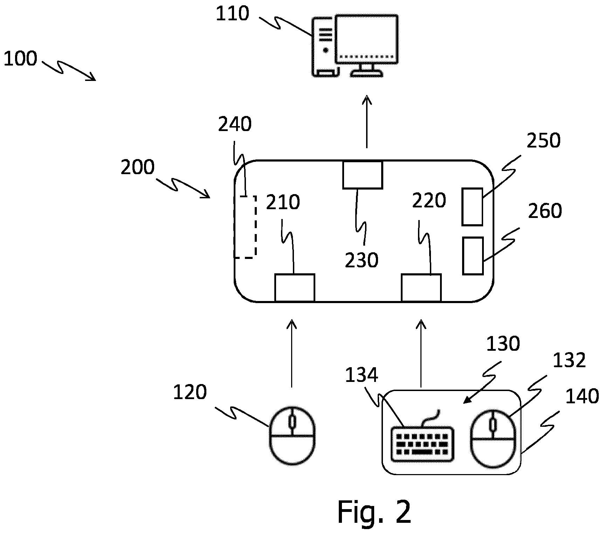

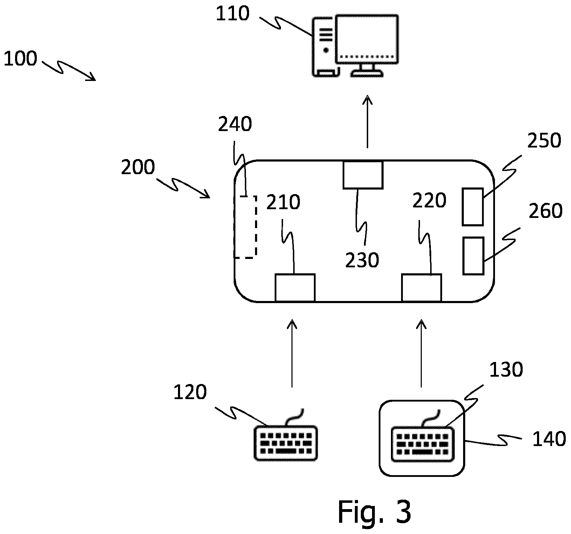

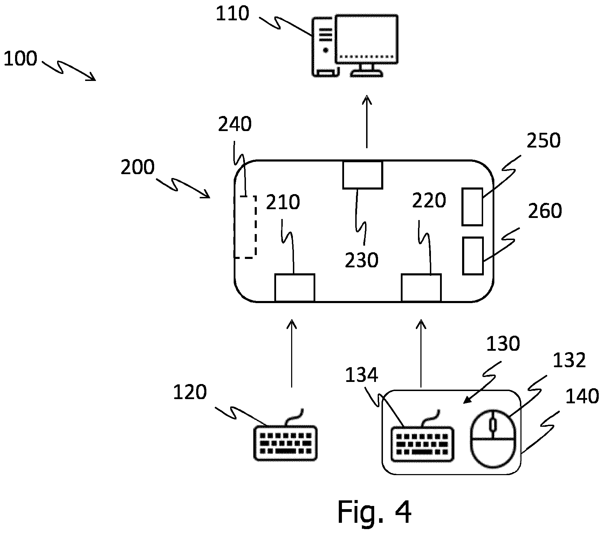

In other variants of the system 100, at least one of the local and remote input devices 120, 130 may be a different device from the ones shown in Fig. 1. For example, the local USB input device 120 may be a computer mouse and the remote input device 130 may be a composite device comprising a mouse part 132 and a keyboard part 134 as shown in Fig. 2. In the variant shown in Fig. 3, the local USB input device 120 and the remote input device 130 are respective computer keyboards. In the variant shown in Fig. 4, the local input device 120 is a computer keyboard and the remote input device 130 is a composite device comprising a mouse part 132 and a keyboard part 134.

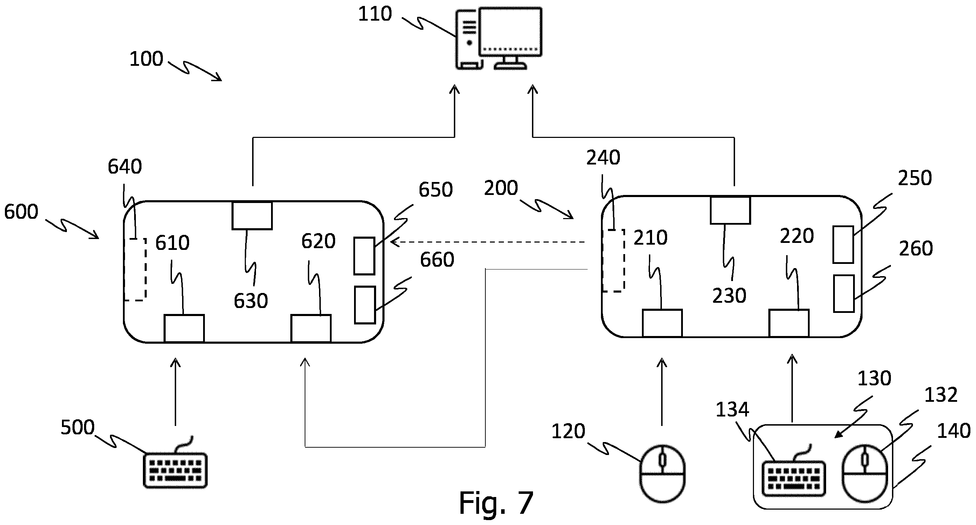

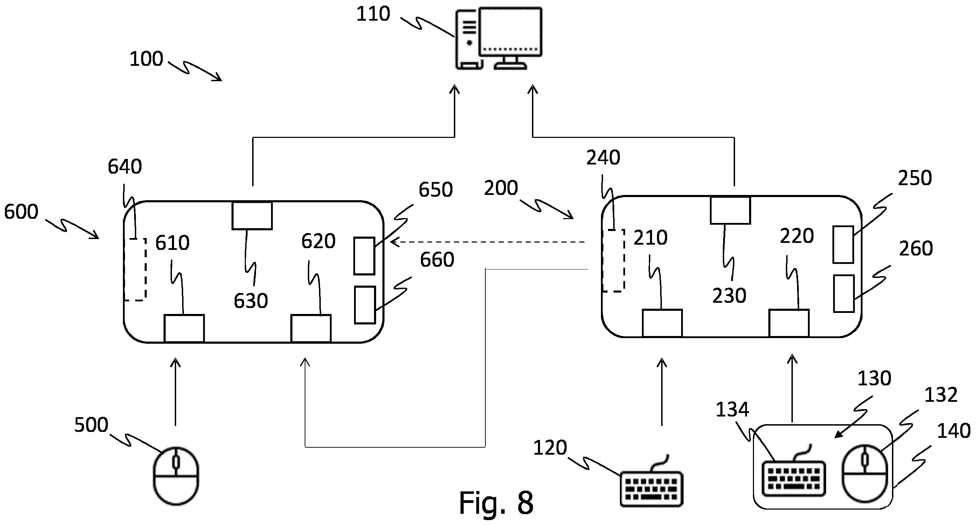

Turning back to Fig. 1, the system 100 further comprises a USB merging device 200 according to the present disclosure. The USB merging device 200 comprises a first input port 210 which, in the shown exemplary setup, is connected to the local USB input device 120, and a second input port 220 is connected to the USB device 140 interfacing with the remote input device 130. The USB merging device 200 further comprises an output port 230 connected to the workstation 110. Optionally, the USB merging device 200 may further comprise a bridging interface 240 enabling a connection of the USB merging device 200 to another USB merging device (such variants will later be described with reference to Figs. 7 and 8).

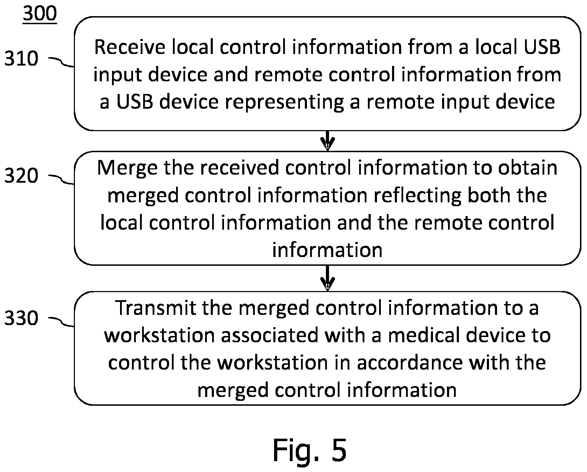

Still further, the USB merging device 200 comprises a processor 250 and a memory 260 containing instructions executable by the processor 250 such that the processor 250 is operable to perform a method 300 explained with reference to Fig. 5 further below. In other variants, the USB merging device 200 may comprise multiple processors 250 and/or multiple memories 260.

Fig. 5 shows a flow diagram of a method 300 which may be performed by the processor 250 of the USB merging device 200. The method 300 comprises a first step 310 of receiving local control information from the local USB input device 120 and remote control information from the USB device 140 representing the remote input device 130. The local and remote control information correspond to respective data streams, each data stream comprising one or more respective control inputs originating from the local USB input device 120 and the remote input device 130 (via the USB device 140). The respective control inputs may be indicative of an actuation of the local USB input device 120 or the remote input device 130. For example, a control input may be - e.g., depending on the employed variant among the variants of Figs. 1 to 4 - indicative of at least one of a movement of a computer mouse or a mouse part of a composite device, scrolling of a computer mouse or a mouse part of a composite device, actuation of at least one button of a computer mouse or a mouse part of a composite device, and actuation of at least one key of a computer keyboard or a keyboard part of a composite device.

The method 300 further comprises a second step 320 of merging the received control information to obtain merged control information reflecting both the local control information and the remote control information. Merging the control information may comprise injecting the control inputs of the remote control information into the local control information, such as based on a FIFO technique, for example.

In a third step 330, the merged control information is transmitted to a workstation 110 associated with a medical device to control the workstation 110 in accordance with the merged control information, i.e., in accordance with the local and the remote control information. As a result, the workstation 110 may be simultaneously controlled by the local USB input device 120 and the remote input device 130.

It will be understood that the method 300 may comprise further steps as described herein with reference to the first aspect.

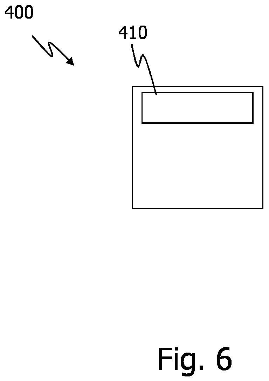

Fig. 6 shows a schematic representation of a computer program product 400 comprising instructions 410 configured to perform the steps of the method 300 described herein, when executed on one or more processors, e.g., on the one or more processors 250 of the USB merging device 200 shown in Figs. 1 to 4.

Fig. 7 shows a schematic representation of a system 100 which is particularly suited for cases in which the workstation 110 may not be able to accept/recognize a composite device as input device (i.e., over a single input device port), but only supports separate ports for two different input devices, for example. In such cases, a second USB merging device according to the present disclosure may be employed. As shown in the example of Fig. 7, the system 100 is likewise dedicated to simultaneously controlling a workstation 110 associated with a medical device by a first local USB input device 120, a second local USB input device 500, and a remote input device 130, wherein the remote input device 130 is a composite device comprising a mouse part 132 and a keyboard part 134.

In comparison to the variants of the system 100 described with reference to Figs. 1 to 4, the system 100 shown in Fig. 7 further comprises the second local USB input device 500 and a second USB merging device 600 designed equivalently to the first USB merging device 200, e.g., comprising a first input port 610, a second input port 620, an output port 630, an optional bridging interface 640, a processor 650 and a memory 660 (wherein multiple processors 650 and/or memories 660 may be contemplated). In the shown exemplary setup, the first input port 610 of the second USB merging device 600 is connected to the second local USB input device 500. Furthermore, the second input port 620 of the second USB merging device 600 is connected to the first USB merging device 200 via the bridging interface 240 of the first USB merging device 200. In other variants, the first and second USB merging devices 200, 600 may be connected by an alternative connection (i.e., other than USB, e.g., using other protocols) enabling transmission of control information from the first USB merging device 200 to the second USB merging device 600. The output port 630 of the second USB merging device 600 is connected to the workstation 110. As shown in Fig. 7, the workstation 110 therefore receives control inputs via two separate input ports.

In the configuration shown in Fig. 7, the memory 260 of the first USB merging device processor 250 contains instructions executable by the processor 250 such that the processor 250 is operable to transmit a part of the remote control information associated with the keyboard part 134 of the composite device 130 to the second USB merging device 600. Furthermore, the memory 660 of the second USB merging device processors 660 contains instructions executable by the processor 650 of the second USB merging device processors 660 such that the processor 650 is operable to receive the remote control information associated with the keyboard part 134 and the local control information of the second local USB input device 500, merge the received control information resulting in second merged control information and transmit the second merged control information to the workstation 110. As a result, the workstation 110 may be simultaneously controlled, via two separate input ports, by the first local USB input device 120, the second local USB input device 500 and the remote input device 130.

Fig. 8 shows a further variant that generally corresponds to the variant shown in Fig. 7, with the exception that the first and second local input devices 120, 500 are switched (i.e., the first local input device 120 is now a computer keyboard instead of a computer mouse and the second local input device 500 is now a computer mouse instead of a computer keyboard).

It will be understood that the method 300 described with respect to Fig. 5 may comprise one or more additional steps described with reference to the second aspect described herein and in particular with reference to the systems of Figs. 7 and 8, e.g., transmitting the part of the control information associated with a part of a remote composite device to the second USB merging device 600 as described herein. Accordingly, the computer program product 400 may comprise instructions 410 that, when executed on the at least one processor 250 of the first USB merging device 200 cause the at least one processor 250 to carry out the method 300 with such one or more additional steps. Furthermore, a (or the) computer program product 400 may comprise instructions 410 that, when executed on the at least one processor 650 of the second USB merging device 600 to cause the at least one processor 650 of the second USB merging device 600 to perform a method equivalent to the method 300 performed by the at least one processor 250 of the first USB merging device 200, wherein the first USB merging device 200 acts as USB device interfacing with the remote input device 130 for the second USB merging device 600.

As has become apparent from the above, the present disclosure provides a technique that generally enables simultaneously controlling a workstation associated with a medical device by at least one local USB input device and a remote input device. It will be understood that the technique presented herein may also be practiced with a general workstation, i.e., not necessarily only with a workstation that is associated with a medical device, as described above. As such, the workstation could also be a general purpose computer (or, more generally, any kind of "computing unit"), for example, which is simultaneously controlled by the multiple input devices in the way described above. Likewise, it will be understood that the second input device based on which the workstation is simultaneously controlled does not necessarily have to be a "remote" input device. Thus, instead of the "remote input device" referred to above, a second "local USB input device" could be used, in which case the second input port of the USB merging device may be connected to a second local USB input device. In such a case, it will be understood that those of the above descriptions which may likewise apply to a "local" (instead of "remote") input device shall likewise be comprised by the present disclosure, i.e., subject to being "local" instead of "remote". In other words, the term "remote" where used in connection with the "remote input device", "remote composite device", "remote computer mouse/keyboard" or "remote control information", for example, may in this case be replaced by the term "local".

It is believed that the advantages of the technique presented herein will be fully understood from the foregoing description, and it will be apparent that various changes may be made in the form, constructions and arrangement of the exemplary aspects thereof without departing from the scope of the invention or without sacrificing all of its advantageous effects. Because the technique presented herein can be varied in many ways, it will be recognized that the invention should be limited only by the scope of the claims that follow.

## Claims

1. A universal serial bus, USB, merging device (200) for simultaneously controlling a workstation (110) associated with a medical device by a local USB input device (120) and a remote input device (130), the USB merging device (200) comprising:
a first input port (210) configured to be connected to the local USB input device (120);
a second input port (220) configured to be connected to a USB device (140) interfacing with the remote input device (130);
a first output port (230) configured to be connected to the workstation (110) via USB;
at least one processor (250);
at least one memory (260) containing instructions executable by the at least one processor (250) such that the at least one processor (250) is operable to:
receive (310) local control information from the local USB input device (120) and remote control information from the USB device (140) interfacing with the remote input device (130);
merge (320) the received control information to obtain merged control information reflecting both the local control information and the remote control information; and
transmit (330) the merged control information to the workstation (110) to control the workstation (110) in accordance with the merged control information.

2. The USB merging device (200) according to claim 1, wherein the USB device (140) interfacing with the remote input device (130) is a Keyboard-Video-Mouse, KVM, switch emulating the remote input device (130).

3. The USB merging device (200) according to claim 1 or 2, wherein:
i) the local USB input device (120) is a local computer mouse and the remote input device (130) is one of a remote computer mouse and a remote composite device; or
ii) the local USB input device (120) is a local computer keyboard and the remote input device (130) is one of a remote computer keyboard and a remote composite device.

4. The USB merging device (200) according to any preceding claim, wherein the local control information is associated with a first value of a control property and the remote control information is associated with a second value of the control property, the first and second values being different from each other,
wherein the at least one memory (260) further contains instructions executable by the at least one processor (250) such that the at least one processor (250) is operable to:
convert the remote control information based on a difference between the first and second values so that the second value associated with the converted remote control information matches the first value.

5. The USB merging device (200) according to claim 4, when dependent on claim 3, wherein the control property is a computer mouse resolution, the first value is indicative of a movement scaling of the local computer mouse, and the second value is indicative of a movement scaling of the remote computer mouse or the mouse part (132) of the remote composite device.

6. The USB merging device (200) according to any preceding claim, wherein each of the local and the remote control information correspond to data streams comprising one or more control inputs, and wherein merging the received information comprises:
injecting the one or more control inputs of the remote control information into the local control information, wherein the resulting local control information is transmitted to the workstation (110) as the merged control information.

7. The USB merging device (200) according to claim 6, wherein the one or more control inputs are indicative of at least one of:
a movement of a computer mouse or a mouse part (132) of a composite device,
scrolling of a computer mouse or a mouse part (132) of a composite device,
actuation of at least one button of a computer mouse or a mouse part (132) of a composite device, and
actuation of at least one key of a computer keyboard or a keyboard part (134) of a composite device.

8. The USB merging device (200) according to any preceding claim, further comprising a bridging interface (240) configured to be connected to a second USB merging device (600) according to any of the preceding claims, wherein the local USB input device (120) is one of a local computer mouse and a local computer keyboard, the remote input device (130) is a remote composite device comprising a mouse part (132) and a keyboard part (134), and the at least one memory (260) further contains instructions executable by the at least one processor (250) such that the at least one processor (250) is operable to:
i) transmit, via the bridging interface (240), a part of the remote control information associated with the mouse part (132) of the remote composite device to the second USB merging device (600), when the local USB input device (120) is a computer keyboard; and
ii) transmit, via the bridging interface (240), a part of the remote control information associated with the keyboard part (134) of the remote composite device to the second USB merging device (600), when the local USB input device is a computer mouse.

9. The USB merging device (200) according to any preceding claim, wherein the at least one memory (260) further contains instructions executable by the at least one processor (250) such that the at least one processor (250) is operable to:
emulate a first input device at the workstation (110), the emulated first input device using a first descriptor having an identifier associated with the local USB input device (120) so that the emulated first input device is identified by the workstation (110) as the local USB input device (120),
wherein optionally:
the local USB input device (120) is one of a local computer mouse and a local computer keyboard, the remote input device (130) is a remote composite device comprising a mouse part (132) and a keyboard part (134), and the emulated first input device is a composite device using the first descriptor and a second descriptor having an identifier associated with i) the mouse part (132) of the composite device, when the local USB input device (120) is a computer keyboard, and ii) the keyboard part (134) of the composite device, when the local USB input device (120) is a computer mouse.

10. A system (100) comprising:
a first USB merging device (200) according to any preceding claim;
a first local USB input device (120) connected to the first input port (210) of the first USB merging device (200); and
a USB device (140) interfacing with the remote input device (130) connected to the second input port (220) of the first USB merging device (200).

11. The system (100) according to claim 10, wherein the first USB merging device (200) is the USB merging device (200) according to claim 7 or claim 8, when depending on claim 7, the system (100) further comprising:
a second USB merging device (600) according to any of claims 1 to 8 and connected to the bridging interface (240) of the first USB merging device (200); and
a second local USB input device (500) being the other one of the local computer mouse and the local computer keyboard and connected to the first input port (610) of the second USB merging device (600);
wherein the at least one memory (660) of the second USB merging device (600) contains instructions executable by the at least one processor (650) of the second USB merging device (600) such that the at least one processor (650) of the second USB merging device (600) is operable to:
receive local control information from the second local USB input device (500) and the part of the remote control information from the first USB merging device (200) via the bridging interface (240);
merge the received control information to obtain second merged control information reflecting both the local control information from the second local USB input device (500) and the part of the remote control information received via the bridging interface (240); and
transmit the second merged control information to the workstation (110) to control the workstation (110) in accordance with the second merged control information.

12. The system (100) according to claim 11, wherein the at least one memory (660) of the second USB merging device (600) further contains instructions executable by the at least one processor (650) of the second USB merging device (600) such that the at least one processor (650) of the second USB merging device (600) is operable to:
emulate a second input device at the workstation (110), the emulated second input device using a third descriptor having an identifier associated with the second local USB input device (500) so that the emulated second input device is identified by the workstation (110) as the second local USB input device (500).

13. The system (100) according to claim 11 or 12, wherein the bridging interface (240) of the first USB merging device (200) is connected to the second input port (620) of the second USB merging device (600).

14. A computer-implemented method (300) for simultaneously controlling a workstation (110) associated with a medical device by a local USB input device (120) and a remote input device (130), the method (300) comprising:
receiving (310) local control information from the local USB input device (120) and remote control information from a USB device (140) interfacing with the remote input device (130);
merging (320) the received control information to obtain merged control information reflecting both the local control information and the remote control information; and
transmitting (330) the merged control information to the workstation to control the workstation (110) in accordance with the merged control information.

15. A computer program product (400) comprising instructions (410) that, when executed on at least one processor (260), cause the at least one processor (260) to carry out the method according to claim 14.
